# FASCICULE DE BREVET EUROPEEN

(11) **EP 1 326 472 B1**
(45) Date de publication et mention de la délivrance du brevet: **21.06.2006**
(21) Numéro de dépôt: 02293232.1
(22) Date de dépôt: 24.12.2002
(51) Int. Cl.: H04Q 11/00

(54) **Noeud de commutation optique à multiplexage à répartition temporelle et répartition sur longueurs d'onde**
Optischer TDM und WDM Vermittlungsknoten
Optical TDM and WDM switching node

(30) Priorité: 03.01.2002 FR 0200044
(43) Date de publication de la demande: 09.07.2003
(73) Titulaire: ALCATEL, 75008 Paris (FR)
(72) Inventeur: Penninckx, Denis, 91620 Nozay (FR); Noirie, Ludovic, 91620 Nozay (FR)
(74) Mandataire: Sciaux, Edmond

(56) Documents cités:
- WO-A-01/95661
- HARADA K ET AL: "HIERARCHICAL OPTICAL PATH CROSS-CONNECT SYSTEMS FOR LARGE SCALE WDMNETWORKS" OFC/IOOC '99 OPTICAL FIBER COMMUNICATION CONFERENCE / INTERNATIONAL CONFERENCE ON INTEGRATED OPTICS AND OPTICAL FIBER COMMUNICATION. SAN DIEGO, CA, FEB. 21 - 26, 1999, OPTICAL FIBER COMMUNICATION CONFERENCE / INTERNATIONAL CONFERENCE ON INTEGRATED OP, 21 février 1999 (1999-02-21), pages WM55-1-WM55-3, XP000966974 ISBN: 0-7803-5430-3
- OKAMOTO S ET AL: "Inter-network interface for photonic transport networks and SDH transport networks" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, 3 novembre 1997 (1997-11-03), pages 850-855, XP010254751 ISBN: 0-7803-4198-8
- OKAMOTO S: "PHOTONIC TRANSPORT NETWORK ARCHITECTURE AND OA&M TECHNOLOGIES TO CREATE LARGE-SCALE ROBUST NETWORKS" IEEE JOURNAL ON SELECTED AREAS IN COMMUNICATIONS, IEEE INC. NEW YORK, US, vol. 16, no. 7, 1 septembre 1998 (1998-09-01), pages 995-1007, XP000785931 ISSN: 0733-8716
- LOWE E ET AL: "AN UPGRADE ROUTE FOR CORE TRANSPORT NETWORKS" COMMUNICATIONS: THE KEY TO GLOBAL PROSPERITY. GLOBECOM 1996. LONDON, NOV. 18 - 22, 1996, GLOBAL TELECOMMUNICATIONS CONFERENCE (GLOBECOM), NEW YORK, IEEE, US, vol. 1, 18 novembre 1996 (1996-11-18), pages 338-342, XP000742176 ISBN: 0-7803-3337-3
- NOIRIE L ET AL: "Impact of intermediate traffic grouping on the dimensioning of multi-granularity optical networks" OPTICAL FIBER COMMUNICATION CONFERENCE. (OFC). TECHNICAL DIGEST POSTCONFERENCE EDITION. ANAHEIM, CA, MARCH 17 - 22, 2001, TRENDS IN OPTICS AND PHOTONICS SERIES. TOPS. VOLUME 54, WASHINGTON, WA: OSA, US, vol. 1 OF 4, 17 mars 2001 (2001-03-17), pages TuG3-1-TuG3-3, XP010545754 ISBN: 1-55752-655-9

## Description

L'invention concerne les réseaux optiques de transmission de données du type fonctionnant en mode paquet. Conformément à ce mode, les éléments de données à destination commune sont groupés dans des paquets qui sont gérés dans le réseau comme des structures unitaires d'information. Le routage des paquets est assuré par référence à des informations contenues dans un en-tête de ce dernier. Le mode paquet est très largement utilisé dans des réseaux de communication électroniques et constitue une solution pour les réseaux optiques avec le mode dit "circuit", où les informations circulent de bout en bout dans un flot sans découpage.

Les réseaux optiques sont destinés à véhiculer des trafics de données numériques très importants sur des échelles continentales et intercontinentales, par exemple pour des applications multimédia sur Internet. La technologie optique permet actuellement d'assurer des débits de l'ordre du Tera (10¹²) bits par second sur une fibre, sans atteindre les limites théoriques qui sont bien supérieures. Elle est donc la solution d'avenir pour l'échange d'informations à forte densité, notamment pour la voix et la vidéo.

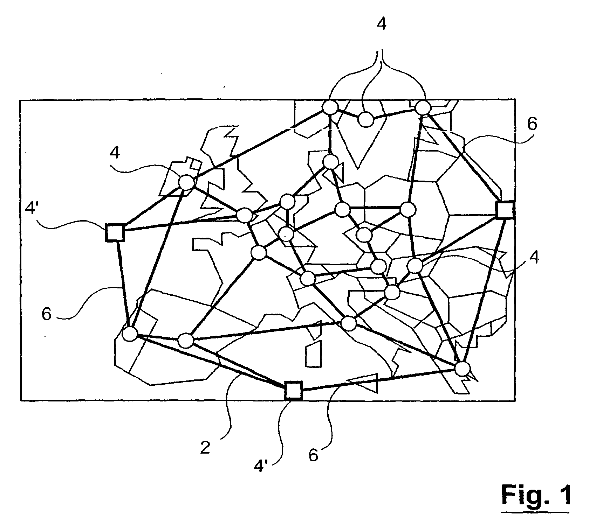

La figure 1 représente un exemple de réseau optique de communication 2 déployé sur le continent européen, dénommé "EON" (de l'anglais "European Optical Network"). Comme tout réseau, il comporte un ensemble de noeuds, que l'on appelle matrices de commutation 4, ces dernières étant reliées par des liens 6 en fibres optiques. La connectivité d'une matrice de commutation 4, qui exprime le nombre de liens 6 différents qu'elle relie, est typiquement de l'ordre de trois ou quatre. Certaines matrices de commutation 4' assurent un relais de communication vers d'autres continents.

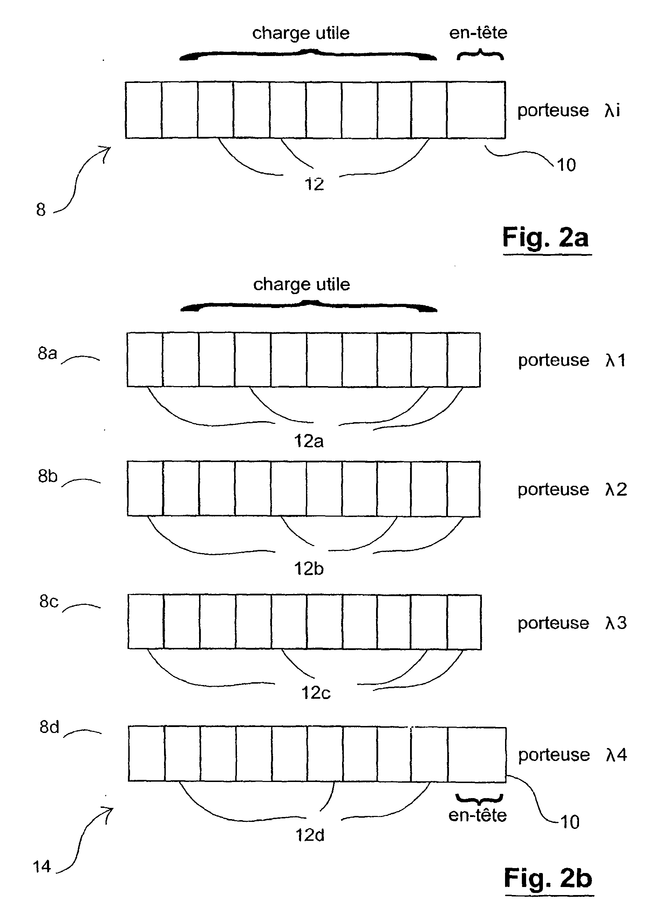

Dans le cas de transmissions en mode paquet, deux techniques de multiplexage sont envisagées pour les réseaux optiques :
- le multiplexage à répartition temporelle, désigné ci-après par l'acronyme TDM (de l'anglais "time division multiplexing"). La figure 2a représente la configuration élémentaire d'un paquet 8 conforme à ce mode de multiplexage, désigné ci-après paquet TDM. Ce dernier comporte un en-tête 10 à une extrémité et des blocs de données 12 qui constituent la charge utile du paquet. On note que tous les éléments (charge utile et en-tête) d'un paquet TDM 8 sont exprimés sur une seule et même longueur d'onde porteuse λi adapté au réseau ;
- le multiplexage à répartition sur longueurs d'onde, désigné ci-après par l'acronyme WDM (de l'anglais "wavelength division multiplexing"). Il s'agit de combiner sur un seul support, en l'occurrence un brin de fibre, plusieurs voies de données indépendantes en attribuant à chacune une longueur d'onde porteuse qui lui est propre. Ce type de multiplexage permet de réduire le débit par porteuse et donc de relâcher les contraintes physiques (électronique servant à la modulation limitée en débit, résistance au bruit,...). La figure 2b représente un exemple de paquet 14 de données véhiculées sur un brin de fibre avec multiplexage WDM sur quatre longueurs d'onde porteuses λ1 à λ4. Sur chaque porteuse, la transmission s'effectue par des sous-paquets respectifs 8a à 8d, chacun ayant une charge utile 12a-12d et formant ensemble la charge utile du paquet 14 conforme à ce mode de multiplexage, désigné ci-après paquet WDM. Généralement, un paquet WDM 14 comporte un unique en-tête 10, ici contenu dans le sous-paquet 8d de longueur d'onde λ4. Le transport des sous-paquets 8a 8d est réalisé en parallèle dans la fibre, en exploitant le principe de superposition linéaire.

Un réseau optique classique ne gère que l'un ou l'autre de ces modes de multiplexage, car les matrices de commutation 4 doivent être spécifiques soit aux paquets TDM, soit aux paquets WDM.

En effet, les ports d'entrée et de sortie des matrices de commutation utilisent des moyens de multiplexage et de démultiplexage prévus pour travailler sur une longueur d'onde ou un ensemble de longueurs d'onde et pour router les paquets selon les règles de protocole imposées par le mode TDM ou par le mode WDM.

Par ailleurs, il existe des réseaux optiques de communication qui assurent l'acheminement des données en mode circuit, c'est-à-dire sans découpage des données en paquets. Dans ce cadre spécifique, il a été proposé des architectures de réseaux optiques dits à "multi-granularité" pour gérer les informations multiplexées en longueur d'onde. On rappelle que la granularité est l'expression du vecteur de base qui véhicule les données. Selon le réseau et la localisation dans ce dernier, il peut s'agir de : i) la longueur d'onde de la porteuse, ii) un groupement de longueurs d'onde, dit bande, ou iii) la fibre porteuse. Ces trois formes de granularité suivent une hiérarchie dans la mesure où la fibre en tant qu'élément physique transporte l'ensemble des n différentes longueurs d'onde acceptées par le réseau, alors qu'un groupe constitue un sous ensemble de m longueurs d'ondes, et enfin la granularité au niveau de la longueur d'onde comprend un seul élément des n ou m longueurs d'onde.

Les matrices de commutation d'un réseau à multi-granularité respectent cette hiérarchie en mettant en oeuvre trois étages de commutation respectifs, chacun équipé de son propre commutateur spatial, à savoir :
- un premier étage interposé entre les fibres d'entrée et de sortie d'un lien, qui permet d'extraire un flux sur une fibre sélectionnée ;
- un deuxième étage qui reçoit sur un démultiplexeur le flux d'une fibre sélectionnée par le premier étage pour en extraire un groupe ; et
- un troisième étage qui reçoit sur un démultiplexeur un groupe du deuxième étage pour en extraire une longueur d'onde sélectionnée.

Ces trois étages sont également prévus pour réaliser une suite inverse d'opérations, permettant d'aboutir par multiplexage à une fibre sélectionné à partir d'une longueur d'onde ou d'un groupe.

Une telle architecture est avantageuse car elle permet de véhiculer différentes longueurs d'onde sur un tronçon commun du réseau, non pas individuellement, mais en groupe, ce qui allège la gestion de l'acheminement en n'utilisant qu'un seul port à la fois pour un routage collectif.

En particulier l'article intitulé "Hierarchical Optical Path Cross-Connect Systems for Large Scale WDM Networks", K. Harada et al, OFC/IOOC '99 Optical Fiber Communication Conference/International Conference on Integrated Optics and Optical Fiber Communication, San Diego, CA, 21-26 février 1999, 21février 1999, pages 356/WM55-1 à 358/WM55, illustre des systèmes de commutation adapté à la multi-granularité.

Les systèmes décrits dans ce document utilisent deux commutateurs spatiaux affectés respectivement aux bandes de longueurs d'onde et aux longueurs d'onde. Des démultiplexeurs de bandes reliés à des fibres d'entrée respectives fournissent les bandes aux entrées du premier commutateur spatial, dont certaines sorties sont reliées à des fibres de sortie par l'intermédiaire de multiplexeurs de bandes, et une autre sortie est reliée à des entrées du second commutateur spatial par l'intermédiaire d'un démultiplexeur de longueurs d'onde. Le second commutateur spatial a ses sorties reliées au premier commutateur spatial par l'intermédiaire de multiplexeurs de longueurs d'onde. Des entrées et des sorties supplémentaires du second commutateur spatial servent respectivement à insérer et extraire des longueurs d'onde.

Ces systèmes réalisent l'aiguillage des données en mode circuit seulement, car il ne participent pas à des formations de paquets de données, notamment de paquets optiques.

En l'état actuel, l'architecture à multi-granularité n'est pas envisageable en dehors d'un mode circuit, s'agissant d'une gestion de nature asynchrone. Or, dans les transmissions en mode paquet, une partie au moins de l'information se présente sous forme de paquets TDM, notamment dans les liens 6, ce qui nécessite de maintenir un mode synchrone.

Par le document **WO 01/95661,** on connaît un procédé de gestion de données sous forme de paquets dans un réseau optique de communication, qui comprend une étape consistant à réunir un ensemble de paquets à multiplexage à répartition temporelle dans un paquet à multiplexage à répartition sur longueurs d'onde, pour former un paquet à multiplexage à répartition sur longueurs d'onde composite.

Ce document décrit un noeud comportant :
- un premier niveau constitué de matrices de commutation de paquets à multiplexage à répartition temporelle,
- et un second niveau constitué d'une matrice de commutation de paquets à multiplexage à répartition sur longueurs d'onde.

Le premier et le second niveau sont couplés par des multiplexeurs et des multiplexeurs spectraux.

Ce noeud connu commute uniquement des paquets à multiplexage à répartition temporelle, alors que le coeur de ce noeud commute uniquement des paquets à multiplexage à répartition sur longueurs d'onde, ces derniers contenant des paquets à multiplexage à répartition temporelle.

Le but de l'invention est de proposer un noeud offrant une polyvalence et une exploitation transparente des différents modes de multiplexage.

L'objet de l'invention est un noeud de commutation optique défini dans la revendication 1.

Les avantages et caractéristiques de l'invention apparaîtront plus clairement à la lecture de la description qui suit des modes de réalisation préférés, donnée purement à titre d'exemples non-limitatifs, par référence aux dessins annexés dont :
- la figure 1, déjà décrite, est un schéma d'exemple d'implantation d'un réseau optique de communication sur une échelle continentale ;
- la figure 2a, déjà décrite, est un schéma illustrant la structure de base d'un paquet TDM ;
- la figure 2b, déjà décrite, est un schéma illustrant la structure de base d'un paquet WDM ;
- la figure 3 est un schéma de principe qui explique la constitution d'un paquet WDM composite à partir de paquets TDM, conformément à la présente invention ;
- la figure 4 est un schéma bloc de l'unité de formation de paquets WDM composites de la figure 3 ;
- la figure 5 est un schéma bloc d'une unité de dégroupage de paquets WDM composites, permettant de restituer les paquets TDM qui la compose ;
- la figure 6 est une représentation schématique d'un premier exemple de noeud simple à conversion de multiplexage TDM/WDM conforme à l'invention ;
- la figure 7 est une représentation schématique d'un deuxième exemple de noeud à conversion de multiplexage TDM/WDM conforme à l'invention ;
- la figure 8 est un schéma de principe montrant la formation d'un super-paquet WDM composite à partir de plusieurs paquets WDM composites ;
- la figure 9 est un schéma montrant la structure d'un super-paquet WDM composite selon une variante du cas présenté à la figure 8 ;
- la figure 10 est une représentation schématique d'un troisième exemple de noeud à conversion de multiplexage TDM/WDM conforme à l'invention ; et
- la figure 11 est un exemple de mise en oeuvre d'une architecture de noeud conforme à l'invention dans le cadre d'un réseau optique du type multi-granularité adapté pour véhiculer des données sous forme de paquets TDM et WDM.

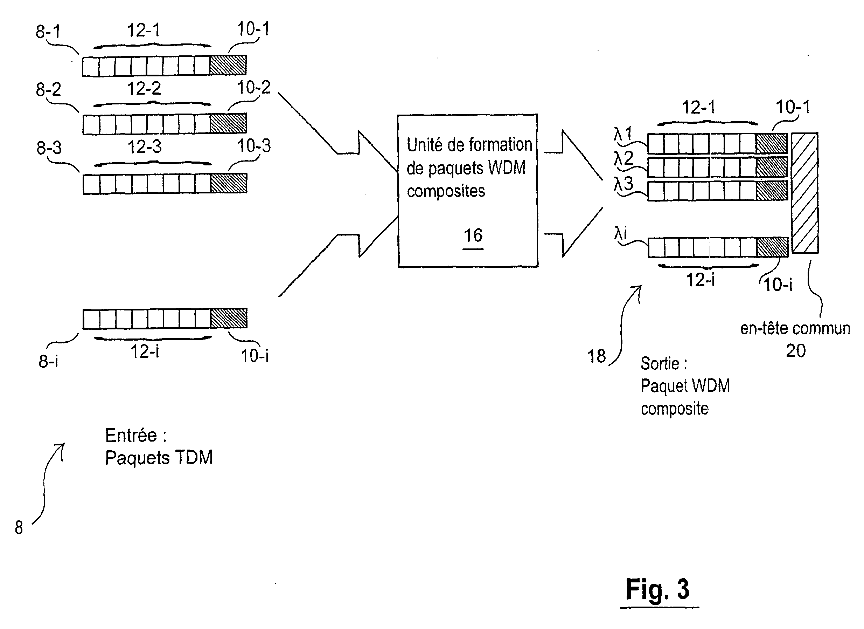

Ainsi que le montre la figure 3, le mode de réalisation comprend une unité 16 dont la fonction est de former des paquets optiques à répartition sur longueurs d'onde 18, dénommés ci-après "paquets WDM composites". Chacun de ces derniers est composé de paquets optiques à multiplexage à répartition temporelle (paquets TDM) 8, dont un exemple est décrit par référence à la figure 2a. Autrement dit, un paquet WDM composite "encapsule" un ensemble de paquets TDM.

Dans l'exemple illustré, un paquet WDM composite 18 est formé à partir d'un nombre i de paquets TDM 8-1 à 8-i, chacun de même longueur et constitué d'un en-tête respectif 10-1 à 10-i et d'une charge utile 12-1 à 12-i. Les paquets TDM (désignés de manière générique par la référence 8) qui constituent un paquet WDM composite 18 peuvent provenir d'une source commune ou de sources différentes. Ces paquets TDM ont cependant le point commun d'être destinés à transiter ensemble sur au moins un même tronçon d'un réseau optique, c'est-à-dire sur un parcours d'au moins un lien 6 du réseau (cf. figure 1).

L'origine des paquets TDM 8-1 à 8-i étant indifférente, leur longueur d'onde porteuse respective peut avoir toute valeur admise par le protocole de fonctionnement utilisé. Ainsi, pour prendre deux cas extrêmes, ces paquets peuvent tous avoir la même longueur d'onde, par exemple s'ils proviennent d'un même terminal, ou tous avoir des longueurs d'onde différentes, et plus généralement une ou plusieurs longueurs d'onde commune(s) à aucun ou à au moins certains paquets TDM.

Le multiplexage WDM nécessite cependant que chaque élément multiplexé ait sa propre longueur d'onde, ce paramètre étant la granularité qui permet de l'identifier. Dans ce cas, l'élément multiplexé étant un paquet TDM 8-1 à 8-i, l'unité 16 de formation de paquets WDM composites assure la condition que chaque paquet TDM encapsulé dans un paquet WDM composite 18 soit sur une porteuse de longueur d'onde qui lui est propre, désignée λ1-λi respectivement pour les paquets TDM 8-1 à 8-i. A cette fin, elle comprend des moyens d'analyse des longueurs d'onde des paquets TDM 8 présentés en entrée et des moyens de conversion de porteuse pour satisfaire les conditions de multiplexage par répartition sur longueurs d'onde.

Par ailleurs, l'unité 16 comprend des moyens d'attribution d'un en-tête commun 20 pour le paquet WDM composite 18. Cet en-tête est établi conformément au protocole utilisé par le réseau optique pour établir le routage sur le/les tronçons commun(s). Dans l'exemple, l'en-tête commun 20 est codé sur l'ensemble des longueurs d'onde λ1-λi multiplexées du paquet WDM composite 18. Toutefois, son rôle étant borné à étiqueter ce paquet, on comprendra que l'en-tête commun 20 peut s'inscrire de toute autre manière, par exemple sur une seule des longueurs d'onde, ou même sur une longueur d'onde en dehors de celles multiplexées, ou encore sur un signal associé sous forme électrique ou hertzienne, dès lors qu'il permet d'indexer le paquet. De même, l'emplacement de l'en-tête commun 20, lorsqu'il est situé au sein du paquet composite, est arbitraire et fonction du protocole choisi.

On note que le paquet WDM composite 18 maintient la forme originale de la structure de données de chacun des paquets WDM 8 qu'il encapsule, notamment en ce qui concerne la longueur de paquet TDM, l'ordonnancement des données qui constitue la charge utile 12-1 à 12-i, et la composition et l'emplacement relatif des en-têtes TDM respectifs 10-1 à 10-i. De la sorte, il est aisé de décomposer le paquet WDM composite 18 - lors d'une opération de dégroupage - et de restituer chacun des paquets TDM 8-1 à 8-i sous leur forme d'origine, moyennant une conversion de longueur d'onde porteuse le cas échéant. Ces paquets TDM 8 pourront alors de nouveau poursuivre leur routage individuel, ou selon un autre groupement, sur la base de leur en-tête 10-1 à 10-i.

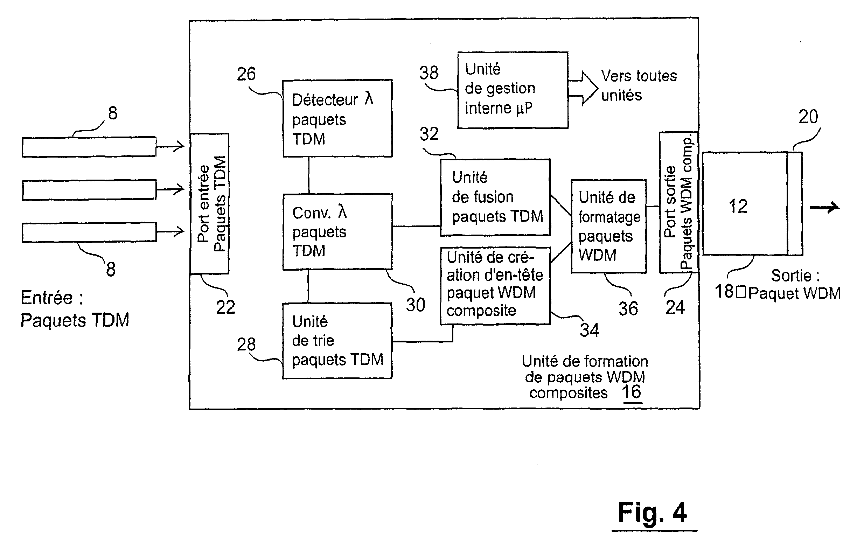

La figure 4 représente sous forme de schéma bloc les différentes unités qui constituent l'unité 16 de formation de paquets WDM, à savoir :
- un port d'entrée 22 destiné à recevoir des paquets TDM 8, celui-ci pouvant être à entrées parallèles ou à entrée série ;
- un port de sortie 24 destiné à émettre des paquets WDM composites 18, typiquement connecté à un port d'entrée à multiplexage WDM d'une matrice de commutation ;
- une unité 26 de détection des longueurs d'onde λ des paquets TDM présentés au port d'entrée, permettant de déterminer les conversions de longueur d'onde λ nécessaires au multiplexage à répartition sur longueurs d'onde du paquet WDM composite qui va les encapsuler ;
- une unité 28 de tri des paquets TDM entrants, qui établit la composition de chaque paquet WDM composite 18. Ce tri prend comme critère la communauté, partielle ou intégrale, des chemins dans le réseau optique que doit parcourir chaque paquet TDM. A cette fin, l'unité 28 comporte des moyens d'analyse des en-têtes 10 des paquets TDM, à partir desquels elle calcule ou se renseigne sur un routage dans le réseau optique. On note que cette unité de tri peut être extérieure à l'unité 16 de formation, dans lequel cas celle-ci fonctionnera sur la base que tout ensemble de paquets TDM 8 présenté dans un créneau donné est à réunir dans un même paquet WDM composite 18. Par ailleurs, des moyens de stockage tampon peuvent être prévus pour gérer le tri et permettre de produire des groupements optimisés ;
- une unité 30 de conversion de longueurs d'onde λ des porteuses des paquets TDM entrants, qui assure ainsi le multiplexage à répartition sur longueurs d'onde des composantes (i.e. les paquets TDM) du paquet WDM composite en cours de formation. La conversion de longueur d'onde peut être réalisée par tout moyen connu, notamment selon des techniques purement optiques, basées par exemple sur des phénomènes d'optique non-linéaire, ou selon des techniques à double conversion, basées sur une transformation intermédiaire des données sous forme électronique ;
- une unité 32 de fusion de paquets TDM, qui réunit les paquets TDM sélectionnés par l'unité de tri 28 après conversion en longueur d'onde par l'unité 30. Cette unité 32 produit effectivement la charge utile sous forme multiplexée du paquet WDM composite, cette charge étant, pour chaque longueur d'onde λ1-λi (figure 3), un paquet TDM comprenant la propre charge utile 12 de ce dernier et son en-tête 10 ;
- une unité 34 de création d'en-tête commun 20 de paquets WDM composites 18, l'en-tête comportant les informations de routage du paquet WDM composite sur le tronçon commun précité du réseau optique. A cette fin, l'unité 34 est renseignée sur ce tronçon commun par l'unité 28 de tri des paquets TDM. Autrement dit, l'en-tête commun 20 est établi en fonction des informations contenues dans les en-têtes 10-1 à 10-i des paquets TDM 8 encapsulés dans le paquet WDM composite auquel il s'associe ;
- une unité 36 de formatage de paquets WDM composites, qui réunit d'une part les paquets TDM fusionnés et mis sous forme multiplexée en longueur d'onde par l'unité de fusion 32, et d'autre part l'en-tête commun 20 associé produit par l'unité 34, pour constituer un paquet WDM composite 18 complet. Ce dernier est ensuite livré sur le port de sortie 24 pour être transporté sur le réseau optique ; et
- une unité 38 de gestion interne à base de microprocesseur (µP) qui commande l'ensemble des unités 22 à 36.

L'unité 16 de formation de paquets WDM permet de faire coexister au sein d'un même réseau de communication optique 4 des lignes de transmission à multiplexage TDM et des lignes de transmission à multiplexage WDM, avec couplage entre ces différentes lignes.

A cette fin, il est également prévu une unité dite de "dégroupage" qui assure une fonction inverse de celle de l'unité 16 de formation de paquets WDM composites, à savoir l'extraction, à partir de ces derniers, des paquets TDM 8 encapsulés.

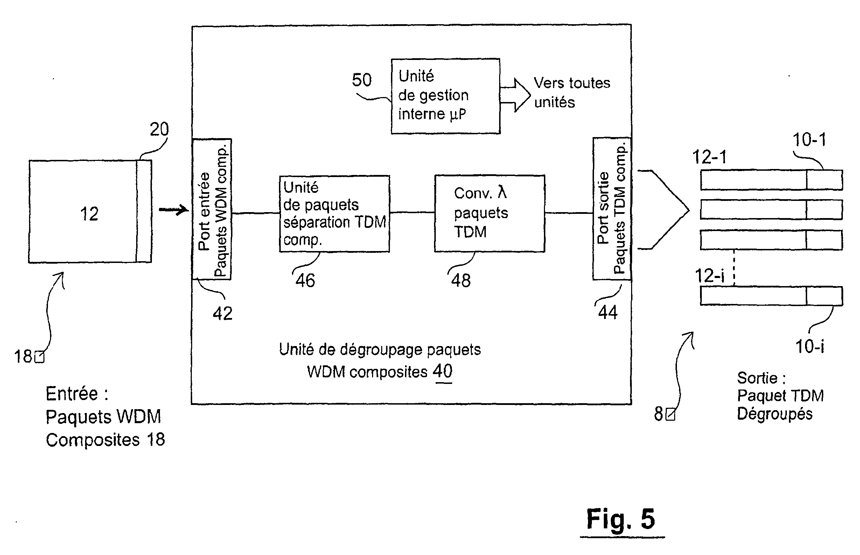

La figure 5 représente sous forme de schéma bloc les différentes unités qui constituent une unité 40 de dégroupage de paquets WDM composites 18, à savoir :
- un port d'entrée 42 destiné à recevoir des paquets WDM composites ;
- un port de sortie 44 destiné à émettre des paquets TDM 8 dégroupés des paquets WDM composites ;
- une unité 46 de séparation des paquets TDM, qui retire l'en-tête commun 20 et extrait les paquets TDM 8, permettant de traiter ces derniers individuellement ;
- une unité 48 de conversion de longueur d'onde des paquets TDM dégroupés de l'unité 46, permettant de les mettre à la longueur d'onde porteuse de la ligne TDM à laquelle est branché le port de sortie 24. Cette unité est réalisée selon des techniques analogues à celles de l'unité 30 précitée ; et
- une unité 50 de gestion interne à base de microprocesseur (µP) qui commande l'ensemble des unités 42-48.

Bien entendu, il peut être envisagé de réunir les deux unités 16 et 40 de formation et de dégroupage de paquets WDM composites en un seul ensemble fonctionnant en mode bi-directionnel et partageant des éléments fonctionnels communs (ports, unité de conversion, unité de gestion, ...).

Dans ce qui suit, il sera décrit quelques exemples d'architectures de noeuds de commutation gérant les deux modes de multiplexage TDM et WDM, grâce à la mise en oeuvre d'unités 16 de formation de paquets WDM composites et/ou d'unités 40 de dégroupage de ces paquets.

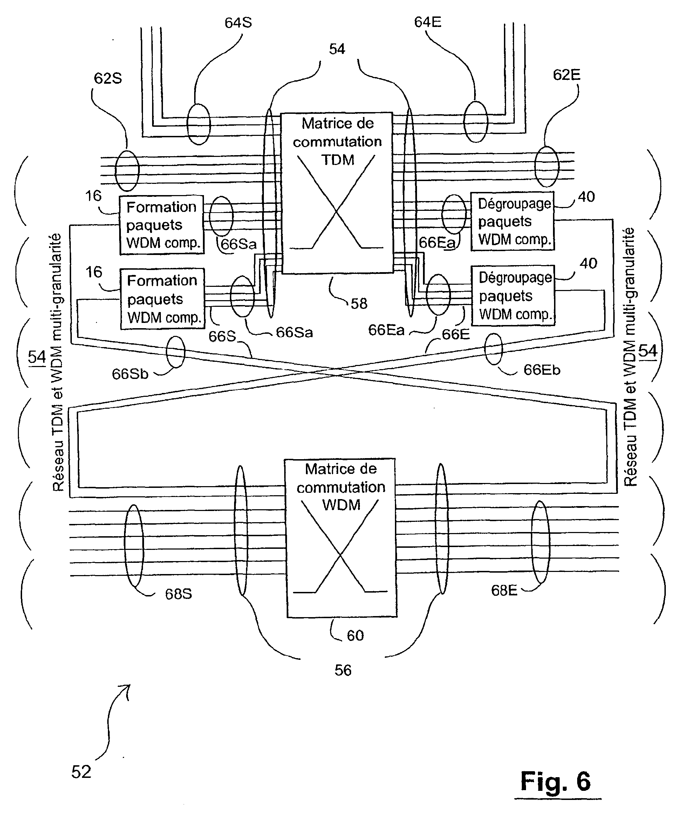

La figure 6 est une représentation schématique d'un premier exemple de noeud 52 simple à conversion de multiplexage TDM/WDM conforme à l'invention, permettant une conversion dans les deux sens (bidirectionnelle) entre les multiplexages TDM et WDM. Un tel noeud 52 se situe typiquement au niveau d'un ou de plusieurs ports d'un réseau optique. Dans l'exemple représenté, le réseau 2 est du type à multi-granularité, en ce sens qu'il traite à la fois des paquets TDM et WDM. Par ailleurs, le réseau est également de multi-granularité du fait chaque paquet WDM occupe une bande spectrale variable, à savoir un nombre variable i de longueurs d'ondes multiplexées. Lorsque ce nombre i atteint sa valeur maximale, égale au nombre de total de différentes longueurs d'onde pouvant être véhiculées au sein d'une même fibre, on atteint alors la limite de granularité de la fibre.

Le noeud 52 gère la commutation à la fois des lignes optiques à multiplexage à répartition temporelle 54 (dénommées ci-après lignes TDM) et des lignes, physiquement séparées, à multiplexage à répartition sur longueurs d'onde (dénommées ci-après lignes WDM) 56, respectivement au moyen d'une matrice de commutation TDM 58 et d'une matrice de commutation WDM 60.

La matrice de commutation TDM 54 agit sur trois ensembles de lignes optiques, à savoir :
- un premier ensemble de lignes, de connexions distantes, pour lesquelles elle assure la connectivité avec d'autres noeuds du réseau. Cet ensemble comprend un nombre de lignes externes d'entrée 62E et un nombre de lignes externes de sortie 62S;
- un deuxième ensemble de lignes, de connexions locales, pour lesquelles elle assure la connectivité avec des équipement locaux, par exemple des terminaux ou des réseaux locaux. Cet ensemble comprend un nombre de lignes locales en entrée 64E et un nombre de lignes locales en sortie 64S ; et
- un troisième ensemble de lignes, désignées lignes de conversion de multiplexage, pour lesquelles elle assure la liaison avec la matrice de commutation WDM 60 respectivement avec des lignes d'entrée 66E et des lignes de sortie 66S (vu depuis la matrice TDM).

Selon des variantes, la matrice de commutation TDM 58 peut ne pas être reliée à des lignes de connexions distantes, ou ne pas être reliée à des lignes de connexions locales.

La matrice de commutation WDM 60 agit sur deux ensembles de lignes optiques, à savoir :
- un premier ensemble de lignes de connexions distantes, pour lesquelles elle assure la connectivité avec d'autres points du réseau. Cet ensemble comprend un nombre de lignes externes d'entrée 68E et un nombre de lignes externes de sortie 68S; et
- le troisième ensemble précité de lignes, de conversion de multiplexage, pour lesquelles elle assure la liaison avec la matrice de commutation TDM 58 sur les lignes 66E et 66S.

Bien entendu, la matrice WDM 60 peut aussi être adaptée pour gérer en outre des lignes locales, à l'instar du deuxième ensemble de lignes de connexions locales. Par ailleurs, on peut envisager en variante que seulement l'une des matrices TDM 58 et WDM 60 ne gère des lignes de connexions distantes, l'autre n'étant alors dédiée qu'aux lignes locales et de conversion de multiplexage.

Les unités 16 et 40 de formation de paquets WDM 16 de dégroupage de paquets WDM sont localisées dans ce troisième ensemble de lignes, entre les matrices de commutation TDM et WDM.

Plus particulièrement, les sorties de la matrice de commutation TDM 58 sur les lignes de conversion de multiplexage (section identifiée par la référence 66Sa) arrivent sur le port d'entrée 22 d'une unité 16 de formation de paquets WDM composites, et le port de sortie 24 de cette unité débouche sur une ligne WDM, ou éventuellement plusieurs (section identifiée par la référence 66Sb), menant à une entrée WDM de conversion de multiplexage de la matrice de commutation WDM 60. Plusieurs lignes 66Sa arrivent en parallèle sur le port d'entrée 22, l'unité 16 effectuant ainsi un multiplexage spatial. Dans l'exemple, deux unités 16 de formation de paquets WDM sont prévues, fonctionnant indépendamment et mutuellement en parallèle sur des lignes 66Sa et 66Sb respectives.

A l'inverse, les sorties de la matrice de commutation WDM 60 sur les lignes de multiplexage (section identifiée par la référence 66Eb) arrivent sur le port d'entrée 42 d'une unité 40 de dégroupage de paquets WDM composites, et le port de sortie 44 de celle-ci débouche sur des lignes TDM (section identifiée par la référence 66Ea) menant à des entrées TDM de conversion de multiplexage de la matrice de commutation TDM 58. On note que, dans l'exemple, le port de sortie 44 de l'unité de dégroupage 40 réalise un démultiplexage spatial en distribuant les différents paquets TDM dégroupés 8 en parallèle sur des lignes d'entrée respectives de la section 66Ea. Bien entendu, d'autres possibilité de démultiplexage peuvent être envisagées, telles que la transmission du port de sortie 44 en série, ou avec démultiplexage sur un nombre arbitraire de lignes différentes. Dans l'exemple, deux unités 40 de dégroupage de paquets WDM sont également prévues, fonctionnant indépendamment et mutuellement en parallèle sur des lignes 66Sa et 66Sb respectives.

En fonctionnement, le noeud 52 opère en transparence et de manière polyvalente sur des lignes à multiplexage TDM et WDM. Les matrices de commutation TDM et WDM assurent le transit des informations sur leurs connexions distantes respectives 62E, 62S et 68E, 68S. Lorsqu'il est nécessaire d'effectuer un routage depuis le noeud 52 avec conversion de multiplexage, les matrices acheminent les données sur le troisième ensemble de lignes précité.

Dans le cas d'une conversion d'un multiplexage TDM vers un multiplexage WDM, la matrice de commutation TDM 58 aiguille les paquets TDM 8 concernés sur des lignes 66Sa menant à une unité 16 de formation de paquets WDM composites disponible. Ces paquets TDM peuvent provenir indifféremment des lignes d'entrée de connexion distante 62E ou de lignes d'entrée de connexion locale 64E, ou encore d'une sortie de paquets TDM dégroupés de la ligne 66Ea, pour une réintégration de paquet(s) TDM dégroupé(s) dans un nouveau paquet WDM composite 18. Les paquets TDM 8 ainsi aiguillés sont réceptionnés par une unité 16 de formation de paquet WDM composite où ils sont groupés sous forme de paquet WDM composite. Les paquets WDM composites ainsi formés sont reçus sur les lignes 68E de la matrice de commutation WDM, à partir desquelles ils sont traités de manière transparente comme tout autre paquet WDM standard. Le transit d'un paquet WDM composite 18 dans la matrice de commutation WDM et au-delà est géré par référence à son en-tête commun 20.

Dans le cas d'une conversion d'un multiplexage WDM vers un multiplexage TDM, la matrice de commutation WDM 60 aiguille les paquets concernés sur des lignes 66Eb menant à une unité 40 de dégroupage de paquets WDM disponible. Chaque paquet WDM reçu est alors décomposé en paquets TDM 8 avec adaptation si nécessaire de longueur d'onde de la porteuse pour être compatible avec la ligne d'entrée 66Ea de la matrice de commutation TDM 58. On note cependant que certaines matrices de commutation TDM peuvent accepter toute longueur en entrée, bien que délivrant qu'une seule longueur d'onde en sortie. Dans ce cas, il serait inutile de prévoir l'adaptation de longueur d'onde en aval de la matrice de commutation TDM 58. A partir de ces lignes, les paquets TDM dégroupés sont traités de manière transparente comme tout autre paquet TDM. Ils peuvent être ainsi dirigés sur des chemins différents pour une connexion distante sur une ligne 62S, ou pour une connexion locale sur une ligne 64S, ou encore redirigés vers une unité 16 de formatage de paquets WDM composites pour être intégrés sélectivement dans un nouveau paquet WDM composite qui sera géré par la matrice de commutation WDM 60.

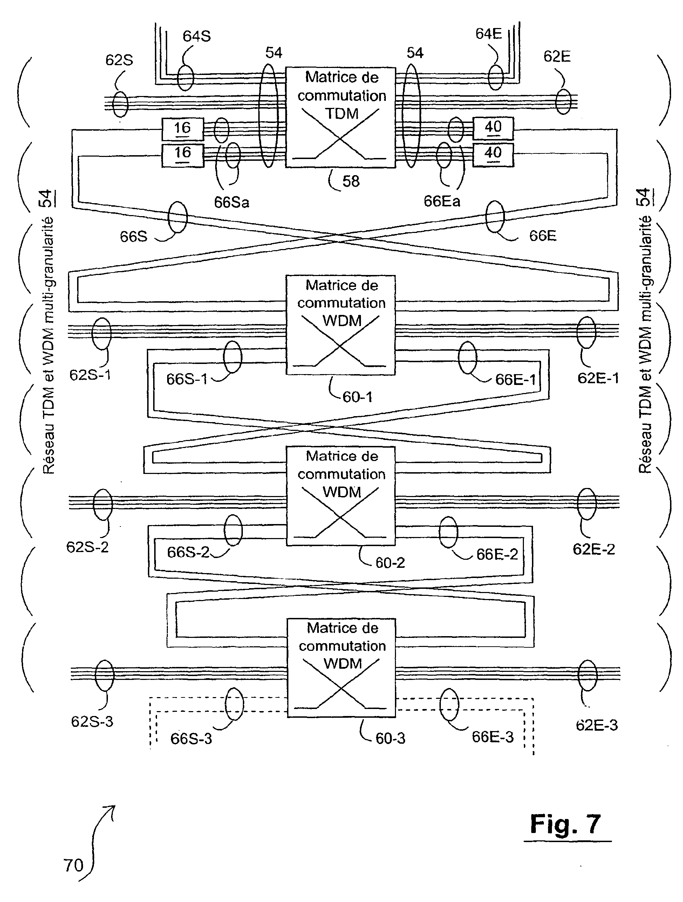

La figure 7 est une représentation schématique d'un deuxième exemple de noeud 70 à conversion de multiplexage TDM/WDM conforme à l'invention, qui diffère du premier exemple par la mise en oeuvre de matrices de commutation WDM multiples 60-1 à 60-3 en cascade (trois dans le cas illustré) pour permettre plusieurs niveaux de regroupement de lignes WDM. Dans cette figure, les éléments communs avec ceux de la figure 6 portent les mêmes références et ne seront pas décrits à nouveau par souci de concision (toutefois, pour des raisons de clarté, les lignes 68E et 68S de la figure 6 sont ici désignées respectivement 68E-1 et 68S-1). La matrice de commutation WDM désignée 60-1 est analogue à celle 60 de la figure 6, mais comporte en outre un ensemble de lignes 66E-1 et 66S-1 qui la relie respectivement à des ports de sortie et à des ports d'entrée d'une deuxième matrice de commutation WDM 60-2.

Cette dernière comporte également des lignes d'entrée et de sortie de connexion distante, respectivement 68E-2 et 68S-2, et un ensemble de lignes 66E-2 et 66S-2 qui la relie respectivement à des ports de sortie et à des ports d'entrée d'une troisième matrice de commutation WDM 60-3.

Les lignes d'interconnexion dans leur ensemble (désignées avec le préfix 66) entre les différentes matrices de commutation 55, 60-1, 60-2 et 60-3 permettent d'acheminer vers la matrice de commutation TDM 58 tout paquet provenant d'une quelconque ligne de connexion distante (désigné avec le préfixe 62) par simple commutation de proche en proche. Ainsi, un paquet WDM composite transitant sur une ligne 62E-3 de la matrice de commutation WDM 62-3 pourra être acheminé successivement vers les matrices WDM 60-2 et WDM 60-1, d'où il transitera sur une ligne 66E pour être dégroupé dans une unité 40 de dégroupage et ensuite traité sous forme de paquets TDM 8 par la matrice de commutation TDM 58.

Inversement, des paquets TDM 8 issus de la matrice de commutation 58 pourront être mis sous forme de paquet WDM composite 18 dans une unité 16, puis transmis sous cette forme sur les lignes d'interconnexion de sortie pour être acheminé sur l'une quelconque des matrices de commutation WDM 60-1 à 60-3. Cette disposition permet d'obtenir un échange bidirectionnel entre les matrices de commutation TDM et WDM.

Bien entendu, le nombre de matrices de commutation WDM pouvant être ainsi concaténées est arbitraire, des matrices WDM pouvant être retirées ou ajoutées, par exemple en utilisant des lignes d'interconnexion 30-3 (pointillées) de la matrice de commutation WDM 60-3.

Cette architecture à matrices WDM successives présente notamment l'intérêt de réunir plusieurs paquets WDM composites en un même paquet WDM composite, que l'on désignera par le terme "super-paquet", par exemple pour partager un tronçon commun.

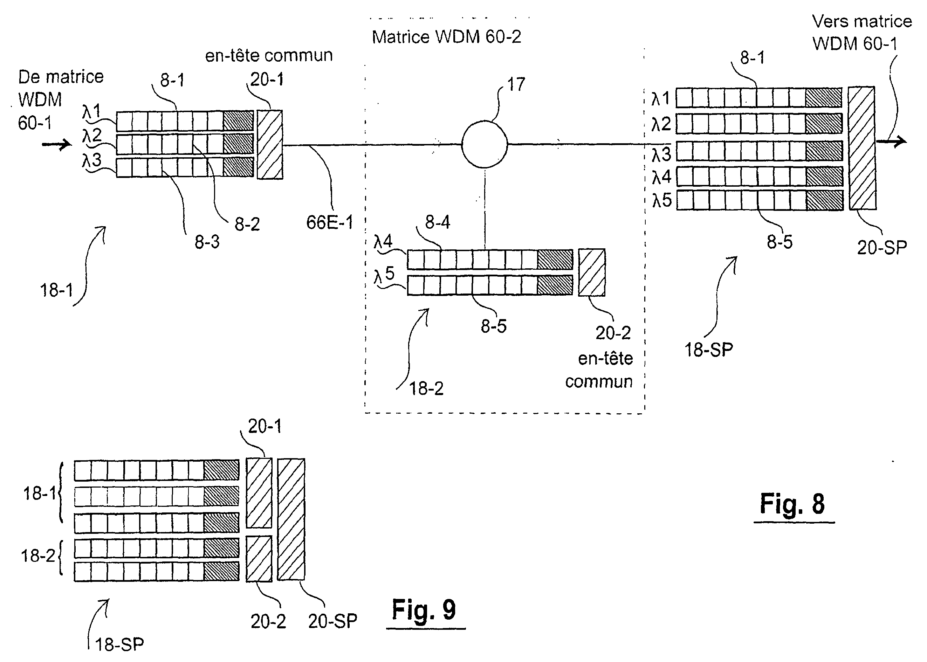

A titre d'exemple, la figure 8 présente un cas où la matrice WDM 60-2 reçoit sur la ligne 66E-1, en provenance de la matrice WDM 60-1, un paquet WDM composite 18-1 composé de trois longueurs d'ondes λ1, λ2 et λ3, chacune véhiculant un paquet TDM respectif 8-1 à 8-3. A son niveau, la matrice WDM 60-2 élabore un paquet composite 18-2 composé de deux longueurs d'onde λ4 et λ5 associés à des paquets TDM respectifs 8-4 et 8-5. Cette matrice analyse l'en-tête commune 20-1 du paquet WDM composite 18-1 et détermine si celui-ci peut s'adjoindre au paquet 18-2 en cours d'élaboration, par exemple en raison d'un tronçon commun. Dans l'affirmatif, la matrice WDM 60-2 produira dans une unité de combinaison 17 le super-paquet WDM composite 18-SP composé des paquets WDM 18-1 et 18-2. A cette fin, elle retire l'en-tête commun 20-1 du paquet WDM composite entrant 18-1 et, le cas échéant, l'en-tête 18-2 du paquet WDM composite en cours d'élaboration pour produire à la place un en-tête 20-SP spécifique à ce super-paquet WDM. Cet en-tête comportera toutes les informations nécessaires au routage du super-paquet WDM, avec éventuellement une information supplémentaire permettant de déterminer en aval qu'il s'agit de deux paquets WDM composites et de séparer ces deux paquets ultérieurement.

Le super-paquet composite 18-SP peut être transmis comme tout autre paquet WDM composite, par exemple vers la matrice WDM 60-1.

En variante, la matrice de commutation WDM 60-2 peut maintenir dans le super-paquet 20-SP les deux en-têtes communs 20-1 et 20-2 des paquets WDM composites constitutifs 18-1 et 18-2, à leur position d'origine, et ajouter l'en-tête de super-paquet 20-SP (soit un super-en-tête) pour englober ces deux en-têtes, comme le montre la figure 9. Dans ce cas, l'unité de dégroupage 40 pourra être prévue pour premièrement analyser le super-en-tête et ensuite analyser les en-têtes communs 20-1 et 20-2 des paquets WDM composites qui composent le super-paquet 20-SP.

Dans l'exemple simplifié, il n'y a pas de conflit de longueur d'onde intervenant dans la création du super-paquet 18-SP, chaque paquet TDM élémentaire constitutif 8-1 à 8-5 étant sur une longueurs d'onde λ1 à λ5 qui lui est propre. On peut cependant prévoir au sein des matrices ce commutation WDM 60 des moyens de conversion de longueur d'onde permettant de changer sélectivement la longueur d'onde d'un paquet TDM faisant l'objet d'un super-paquet WDM composite pour éviter tout conflit d'occupation de bande spectrale.

Bien entendu, le nombre de paquets TDM possibles dans un super-paquet WDM composite, ainsi que le nombre de paquets WDM composites combinés pour réaliser un tel super-paquet, sont arbitraires dans la limite de la bande spectrale de l'élément du réseau concerné. De même, on peut produire des super-paquets WDM à partir d'autres super-paquets.

La possibilité de former et d'exploiter des super-paquets est ouverte à toute matrice de commutation WDM, et ce également dans d'autres architectures que celle présentée par référence à la figure 7. Par ailleurs, on peut prévoir des unités spécifiques à la création de super-paquets WDM en dehors des matrices de commutation WDM.

Dans un cas pratique, on peut fixer que le nombre de longueurs d'onde de chaque paquet WDM entrant sera identique.

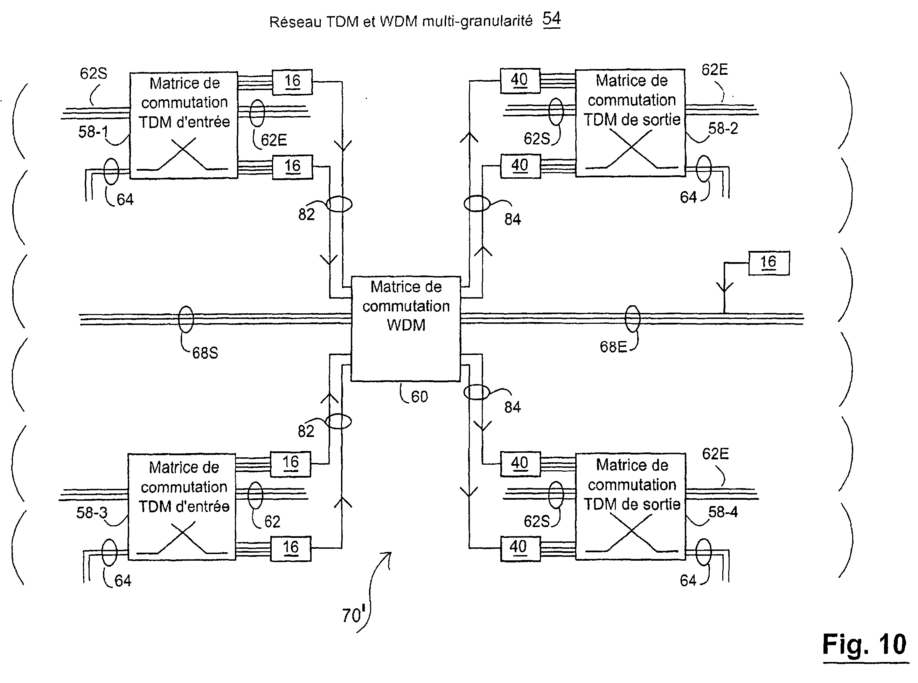

La figure 10 est une représentation schématique d'un troisième exemple de noeud 70' à conversion de multiplexage TDM/WDM conforme à l'invention. Cette architecture regroupe plusieurs matrices de commutation TDM (quatre dans l'exemple) 58-1 à 58-4 autour d'une matrice de commutation WDM 60, selon une configuration en étoile. Les quatre matrices de commutation TDM sont réparties respectivement en deux matrices d'entrée 58-1 et 58-3 (à gauche sur la figure) servant de source d'entrée et deux matrices de sortie 58-2 et 58-4 (à droite sur la figure) servant de destination vis-à-vis de la matrice de commutation WDM centrale 60.

Chaque matrice de commutation TDM d'entrée 58-1 et 58-3 communique avec la matrice de commutation WDM 60 par deux unités 16 de formation de groupe de paquets WDM composites, offrant deux voies parallèles vers la matrice de commutation WDM 60 (lignes 82). De même, chaque matrice de commutation TDM de sortie 58-2 et 58-4 communique avec la matrice de commutation WDM 60 par deux unités 40 de dégroupage de paquets WDM composites offrant deux voies parallèles depuis la matrice de commutation WDM 60.

Les matrices de commutation TDM peuvent par ailleurs communiquer entre elles soit via la matrice commutation WDM, soit directement entre elles. Les matrices peuvent aussi avoir un nombre de lignes de connexion distante 62E, 62, 68E, 68S et de lignes de connexion locales 64.

Le nombre de matrices de commutation TDM ainsi reliées en étoile à une matrice de commutation WDM est arbitraire.

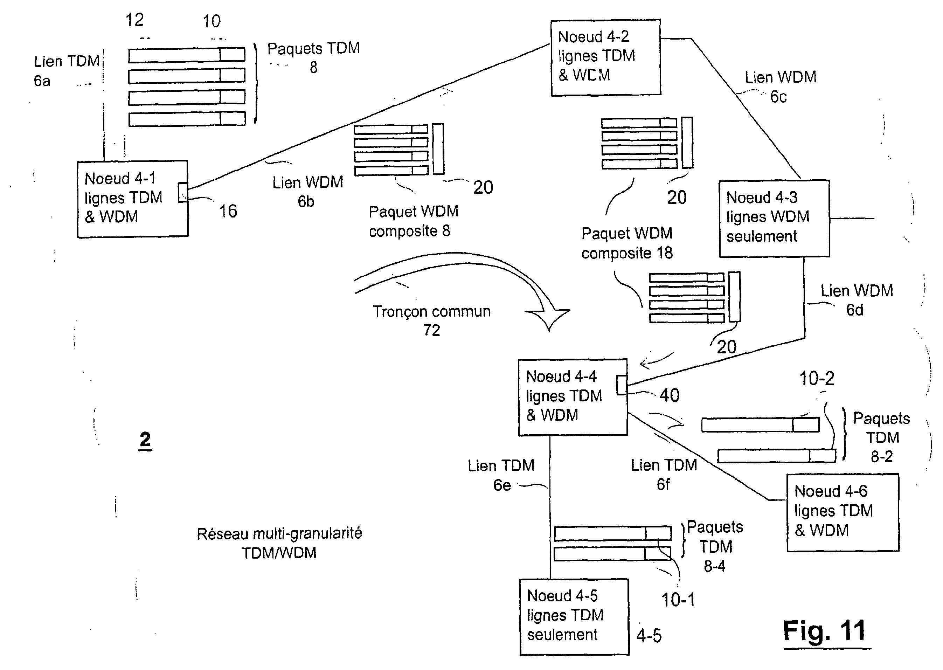

La figure 11 est un exemple de mise en oeuvre des différentes architectures de noeuds et de structures de paquets, décrits plus haut par référence aux figures 3 à 8, dans le cadre d'un réseau optique du type multi-granularité 2 adapté pour véhiculer des données sous forme de paquets TDM et WDM.

L'exemple considère le cas d'un transit de données sous forme de paquets TDM 8 arrivant à un noeud 4-1 par un lien TDM 6a. Parmi ces paquets, un premier ensemble 8-1 est à destination d'un noeud spécifié 4-5 et un second ensemble 8-2 est à destination d'un autre noeud spécifié 4-6. Le routage vers ces différents noeuds de destination passe par des noeuds intermédiaires communs, successivement 4-2, 4-3 et 4-4, qui forment collectivement un tronçon commun 72. Ces noeuds intermédiaires communs, et les liens 6b, 6c, 6d qui les relient, sont aptes à faire véhiculer des paquets WDM.

Par ailleurs, au moins le premier noeud 4-1 et le dernier noeud 4-4 du tronçon commun sont équipés respectivement d'une unité 16 de formation de paquets WDM composites 18 et d'une unité 40 de dégroupage de ces derniers.

Conformément à l'invention, on réunit les premier et second ensembles de paquets TDM 8-1 et 8-2 en un paquet WDM composite 18 pour son transit sur le tronçon commun 72. Cette disposition est avantageuse notamment par le fait qu'elle permet d'exploiter la très grande passante offerte par la technique WDM et n'utilise qu'un port d'entrée et de sortie pour chacun des noeuds intermédiaire communs 4-2 à 4-4. Le routage sur ce tronçon commun est géré par référence à l'en-tête commun 20 du paquet WDM composite, qui spécifie entre autres le dernier noeud commun 4-4.

Lorsque le paquet WDM composite 18 parvient au dernier noeud 4-4 du tronçon commun, il est traité par l'unité de dégroupage 40 de ce dernier pour en extraire les paquets TDM des ensembles 8-1 et 8-2 encapsulés. Ce noeud 4-4 effectue alors la commutation des paquets vers leur noeud de destination finale 4-5 et 4-6, respectivement sur les liens 6e et 6f. L'information de routage depuis le dernier noeud 4-4 du tronçon commun est obtenue par référence aux en-têtes 10-1 et 10-2 des paquets TDM 8-1 et 8-2. Bien entendu, le routages de ces paquets peut faire intervenir un nombre arbitraire de noeuds du réseau en fonction de leur destination finale. Il est alors possible que l'un des ensembles de paquets TDM soit de nouveau encapsulé dans un paquet WDM composite avec d'autres paquets TDM pour partager un autre tronçon commun.

On note qu'il n'est pas impératif que chaque noeud du réseau optique 2 soit équipé pour gérer à la fois des paquets TDM et des paquets WDM, même si ce cas de figure constitue une solution optimale. Ainsi, le routage sur le tronçon intermédiaire 72 conformément à l'invention peut être réalisé même si au moins un des noeuds (4-3 dans l'exemple) ne peut gérer que des lignes WDM. De même, en dehors d'un tronçon commun donné, un noeud (4-5 dans l'exemple) peut ne gérer que des paquets TDM.

D'autres exemples d'architectures et d'analyses de routage envisageables dans le cadre de l'invention peuvent adaptés à partir des enseignement des documents suivants qui traitent de réseaux optiques à multi-granularité dans leur généralité : i) L. Noirie et al., "Multi-granularity optical cross-connect", ECOC'2000, paper 9.2.4, et ii) L. Noirie et al., "Impact of intermediate traffic grouping on the dimensioning of multi-granularity optical networks", OFC'2001, paper TuG3.

Il est apparent pour l'homme du métier que l'invention revendiquée se prête à de nombreuses variantes, tant structurelles que fonctionnelles, sans pour autant sortir de son cadre.

## Revendications

1. Noeud de commutation optique (52 ; 70), **caractérisé en ce qu'**il comporte :
- au moins une matrice (58) de commutation de paquets à multiplexage à répartition temporelle (8),
- au moins une matrice (60) de commutation de paquets à multiplexage à répartition sur longueurs d'onde,
- au moins un dispositif (16) de formation de paquets de données optiques à multiplexage à répartition sur longueurs d'onde (18) dont une entrée (22) est couplée à une matrice (58) de commutation de paquets à multiplexage à répartition temporelle (8) et une sortie (24) est couplée à une matrice (60) de commutation de paquets à multiplexage à répartition sur longueurs d'onde, ce dispositif (16) de formation de paquets étant prévu d'une part pour sélectionner des paquets optiques à multiplexage à répartition temporelle issus de la matrice (58) de commutation de paquets à multiplexage à répartition temporelle et qui sont destinés à transiter ensemble sur au moins un même tronçon d'un réseau optique, et d'autre part pour former des paquets à multiplexage à répartition sur longueurs d'onde composite comportant chacun lesdits paquets à multiplexage à répartition temporelle sélectionnés en les faisant porter par des longueurs d'onde respectives et en les associant à un en-tête commun (20) ;
- au moins un dispositif (40) de démultiplexage de paquets optiques à multiplexage à répartition sur longueurs d'onde, dont une entrée (42) est couplée à une matrice (60) de commutation de paquets à multiplexage à répartition sur longueurs d'onde et une sortie (44) est couplée à une matrice (58) de commutation de paquets à multiplexage à répartition temporelle ;
et **en ce que** la matrice (60) de commutation de paquets à multiplexage à répartition sur longueurs d'onde comporte des entrées (68E) et des sorties (68S) pour recevoir et émettre des paquets à multiplexage à répartition sur longueurs d'onde, en provenance et à destination d'autres noeuds.

2. Noeud selon la revendication 1, **caractérisé en ce que** le dispositif (16) de formation de paquets de données optiques à multiplexage à répartition sur longueurs d'onde comprend en outre des moyens (17) pour réunir plusieurs paquets à multiplexage à répartition sur longueurs d'onde composite (18-1, 18-2) en un seul paquet à multiplexage à répartition sur longueurs d'onde composite (18-SP).

3. Noeud (70) selon la revendication 1, **caractérisé en ce qu'**une matrice (58) de commutation de paquets à multiplexage à répartition temporelle comporte des entrées (62E) et des sorties (62S) pour recevoir et émettre des paquets à multiplexage à répartition temporelle, en provenance et à destination d'autres noeuds.

4. Noeud (70) selon la revendication 1, **caractérisé en ce qu'**une matrice (58) de commutation de paquets à multiplexage à répartition temporelle comporte des entrées (64E) et des sorties (64S) pour recevoir et émettre des paquets à multiplexage à répartition temporelle, en provenance et à destination de stations locales.

5. Noeud (70) selon la revendication 1, **caractérisé en ce que** la matrice (58) de commutation de paquets à multiplexage à répartition temporelle est couplée à une cascade de plusieurs matrices (60-1 à 60-3) de commutation de paquets à multiplexage à répartition sur longueurs d'onde, une de ces dernières pouvant recevoir des données optiques provenant de la matrice (58) de commutation de paquets à multiplexage à répartition temporelle par un dispositif (16) de formation de paquets de données optiques à multiplexage à répartition sur longueurs d'onde (18) et, le cas échéant, émettre des données optiques vers la matrice (58) de commutation de paquets à multiplexage à répartition temporelle par un dispositif (40) de démultiplexage de paquets optiques à multiplexage à répartition sur longueurs d'onde (40).

6. Noeud (70') selon la revendication 1, **caractérisé en ce qu'**il comprend au moins une matrice (60) de commutation de paquets à multiplexage à répartition sur longueurs d'onde reliée en étoile à plusieurs matrices (58-1 à 58-4) de commutation de paquets à multiplexage à répartition temporelle, dont :
- au moins une matrice de commutation de paquets à multiplexage à répartition temporelle d'entrée (58-1, 58-3) est reliée à une entrée de la matrice (60) de commutation de paquets à multiplexage à répartition sur longueurs d'onde via au moins un dispositif (16) de formation de paquets de données optiques à multiplexage à répartition sur longueurs d'onde (18), et
- au moins une matrice de commutation de paquets à multiplexage à répartition temporelle de sortie (58-2, 58-4) est reliée à une sortie de la matrice (60) de commutation de paquets à multiplexage à répartition sur longueurs d'onde via au moins un dispositif (40) de démultiplexage de paquets optiques à multiplexage à répartition sur longueurs d'onde.

7. Noeud selon la revendication 1, **caractérisé en ce qu'**il comprend des moyens (28) de sélection des paquets à multiplexage à répartition temporelle (8) devant former un paquet à multiplexage à répartition sur longueurs d'onde (18) par identification de tronçons communs (72) destinés à être empruntés par les données de ces paquets (8).

8. Réseau optique de communication (2) pour le transport de données sous forme de paquets, gérant à la fois des paquets à multiplexage à répartition temporelle (8) et des paquets à multiplexage à répartition sur longueurs d'onde (18) ; **caractérisé en ce qu'**il comporte au moins un noeud selon l'une des revendications précédentes.

## Claims

1. An optical switching node (52; 70) **characterized in that** it comprises:
- at least one matrix (58) for switching time division multiplex packets (8);
- at least one matrix (60) for switching wavelength division multiplex packets;
- at least one device (16) for forming wavelength division multiplex optical data packets (18), the device having an input (22) coupled to a matrix (58) for switching time division multiplex packets (8) and an output (24) coupled to a matrix (60) for switching wavelength division multiplex packets, the packet-forming device (16) being adapted on the one hand to select time division multiplex optical packets coming from the matrix (58) for switching time division multiplex packets, and which are intended to be conveyed together over at least a common segment of an optical network, and on the other to form composite wavelength division multiplex packets each including said time division multiplex packets selected by causing them to be carried by respective wavelengths and by associating them with a common header (20); and
- at least one device (40) for demultiplexing wavelength division multiplex optical packets, the device having an input (42) coupled to a matrix (60) for switching wavelength division multiplex packets and an output (44) coupled to a matrix (58) for switching time division multiplex packets,
and **in that** the matrix (60) for switching wavelength division multiplex packets has inputs (68E) and outputs (68S) for receiving and sending wavelength division multiplex packets from and to other nodes.

2. A node according to claim 1, **characterized in that** the device (16) for forming wavelength division multiplex optical data packets further comprises means (17) for combining a plurality of composite wavelength division multiplex packets (18-1, 18-2) into a single composite wavelength division multiplex packet (18-SP).

3. A node (70) according to claim 1, **characterized in that** a time division multiplex packet switching matrix (58) has inputs (62E) and outputs (62S) for receiving and sending time division multiplex packets from and to other nodes.

4. A node (70) according to claim 1, **characterized in that** a time division multiplex packet switching matrix (58) has inputs (64E) and outputs (64S) for receiving and sending time division multiplex packets from and to local stations.

5. A node (70) according to claim 1, **characterized in that** the time division multiplex packet switching matrix (58) is coupled to a cascade of wavelength division multiplex packet switching matrices (60-1 to 60-3), one of which can receive optical data coming from the time division multiplex packet switching matrix (58) via a device (16) for forming wavelength division multiplex optical data packets (18) and, where applicable, send optical data to the time division multiplex packet switching matrix (58) via a device (40) for demultiplexing wavelength division multiplex optical packets (40).

6. A node (70') according to claim 1, **characterized in that** it comprises a wavelength division multiplex packet switching matrix (60) connected in a star configuration to time division multiplex packet switching matrices (58-1 to 58-4) comprising:
- at least one input time division multiplex packet switching matrix (58-1, 58-3) connected to an input of the wavelength division multiplex packet switching matrix (60) via a device (16) for forming wavelength division multiplex optical data packets (18); and
- at least one output time division multiplex packet switching matrix (58-2, 58-4) connected to an output of the wavelength division multiplex packet switching matrix (60) via at least one device (40) for demultiplexing wavelength division multiplex optical packets.

7. A node according to claim 1, **characterized in that** it includes means (28) for selecting time division multiplex packets (8) to form a wavelength division multiplex packet (18) by identifying common sections (72) to be taken by the data of said packets (8).

8. An optical communications network (2) for transporting data in the form of packets and for managing both time division multiplex packets (8) and wavelength division multiplex packets (18), which network is **characterized in that** it includes at least one node according to any preceding claim.

## Patentansprüche

1. Optischer Vermittlungsknoten (52, 70), **dadurch gekennzeichnet, dass** er umfasst:
- mindestens eine Matrix (58) zur Vermittlung von TDM-Paketen (8);
- mindestens eine Matrix (60) zur Vermittlung von WDM-Paketen;
- mindestens eine Vorrichtung (16) zur Bildung von optischen WDM-Datenpaketen (18), von der ein Eingang (22) mit der Matrix (58) zur Vermittlung von TDM-Paketen (8) gekoppelt ist und ein Ausgang (24) mit einer Matrix (60) zur Vermittlung von WDM-Paketen gekoppelt ist, wobei diese Vorrichtung (16) zur Bildung von Paketen dafür vorgesehen ist, einerseits optische TDM-Pakete auszuwählen, die aus der Matrix (58) zur Vermittlung von TDM-Paketen gekommen sind und die dazu bestimmt sind, gemeinsam einen Weg durch mindestens einen selben Abschnitt eines optischen Netzes zurückzulegen, und andererseits, um zusammengesetzte WDM-Pakete zu bilden, von denen jedes die ausgewählten TDM-Pakete umfasst, um zu bewirken, dass sie von entsprechenden Wellenlängen getragen werden und um sie einem gemeinsamen Header (20) zuzuordnen;
- mindestens eine Vorrichtung (40) zum Demultiplexen optischer WDM-Pakete, von der ein Eingang (42) mit einer Matrix (60) zur Vermittlung von WDM-Paketen gekoppelt ist und ein Ausgang (44) mit einer Matrix (58) zur Vermittlung von TDM-Paketen gekoppelt ist;
und dadurch, dass die Matrix (60) zur Vermittlung von WDM-Paketen Eingänge (68E) und Ausgänge (68S) aufweist, um WDM-Pakete von anderen Knoten zu empfangen bzw. zu anderen Knoten zu senden.

2. Knoten nach Anspruch 1, **dadurch gekennzeichnet, dass** die Vorrichtung (16) zur Bildung von optischen WDM-Datenpaketen außerdem Vorrichtungen (17) umfasst, um mehrere zusammengesetzte WDM-Pakete (18-1, 18-2) zu einem einzigen zusammengesetzten WDM-Paket (18-SP) zu vereinen.

3. Knoten (70) nach Anspruch 1, **dadurch gekennzeichnet, dass** eine Matrix (58) zur Vermittlung von TDM-Paketen Eingänge (62E) und Ausgänge (62S) umfasst, um TDM-Pakete von anderen Knoten zu empfangen bzw. zu anderen Knoten zu senden.

4. Knoten (70) nach Anspruch 1, **dadurch gekennzeichnet, dass** eine Matrix (58) zur Vermittlung von TDM-Paketen Eingänge (64E) und Ausgänge (64S) aufweist, um TDM-Pakete von lokalen Stationen zu empfangen bzw. zu lokalen Stationen zu senden.

5. Knoten (70) nach Anspruch 1, **dadurch gekennzeichnet, dass** die Matrix (58) zur Vermittlung von TDM-Paketen mit einer Kaskade mehrerer Matrizen (60-1 bis 60-3) zur Vermittlung von WDM-Paketen gekoppelt ist, wobei eine von diesen letztgenannten Matrizen optische Daten empfangen kann, die von der Matrix (58) zur Vermittlung von TDM-Paketen kommen, und zwar über eine Vorrichtung (16) zur Bildung von optischen WDM-Datenpaketen (18), und wobei sie gegebenenfalls optische Daten an die Matrix (58) zur Vermittlung von TDM-Paketen über eine Vorrichtung (40) zum Demultiplexen von optischen WDM-Paketen (40) senden kann.

6. Knoten (70') nach Anspruch 1, **dadurch gekennzeichnet, dass** er mindestens eine Matrix (60) zur Vermittlung von WDM-Paketen umfasst, die sternförmig mit mehreren Matrizen (58-1 bis 58-4) zur Vermittlung von TDM-Paketen verbunden ist, von denen:
- mindestens eine Matrix zur Vermittlung von ankommenden TDM-Paketen (58-1, 58-3) mit einem Eingang der Matrix (60) zur Vermittlung von WDM-Paketen über eine Vorrichtung (16) zur Bildung von optischen WDM-Datenpaketen (18) verbunden ist; und
- mindestens eine Matrix zur Vermittlung von abgehenden TDM-Paketen (58-2, 58-4) mit einem Ausgang der Matrix (60) zur Vermittlung von WDM-Paketen über eine Vorrichtung (40) zum Demultiplexen von optischen WDM-Paketen verbunden ist.

7. Knoten nach Anspruch 1, **dadurch gekennzeichnet, dass** er Vorrichtungen (28) zur Auswahl von TDM-Paketen (8) umfasst, die ein WDM-Paket bilden sollen, und zwar durch Erkennung gemeinsamer Abschnitte (72), die von den Daten dieser Pakete (8) benutzt werden sollen.

8. Optisches Kommunikationsnetz (2) für den Transport von Daten in Form von Paketen, das gleichzeitig TDM-Pakete (8) und WDM-Pakete (18) verwaltet, **dadurch gekennzeichnet, dass** es mindestens einen Knoten nach einem der vorgenannten Ansprüche umfasst.
